# EUROPEAN PATENT APPLICATION

(11) **EP 2 236 869 A2**
(43) Date of publication of application: **06.10.2010**
(21) Application number: 10158267.4
(22) Date of filing: 29.03.2010
(51) Int. Cl.: F16J 15/32, F16J 15/34

(54) **Sealing device**

(30) Priority: 30.03.2009 JP 2009082293
(71) Applicant: Uchiyama Manufacturing Corp., Okayama-shi Okayama (JP)
(72) Inventor: Ohmori, Fumitaka, Okayama (JP); Shibayama, Masanori, Okayama (JP)
(74) Representative: Sajda, Wolf E.

(57) **Abstract**

A sealing device is disposed between an outer member (6) and an inner member (3) with a flange portion (4d) in which the outer and inner members (3, 6) are concentrically disposed and rotatable relative to each other. The sealing device (8) comprises a core metal (10) fit to the outer member (6), and an elastic seal member (11) having a seal lip integrally fixed to the core metal (10). The seal lip has a side lip (13) elastically and slidably contacting the flange portion (4d), and an exterior lip (12) formed at the outer diameter side of the side lip (13) so as to extend toward the flange portion (4d). The exterior lip (12) has a projecting portion (12a) projecting toward the flange portion (4d).

## Description

### TECHNICAL FIELD

The present invention relates to a sealing device, and more particularly a sealing device to be mounted between an outer ring at hub flange side and a hub wheel for use in a hub bearing rotatably supporting wheels, specifically automobile wheels.

### BACKGROUND ART

Such a sealing device is disclosed in the following Patent Documents 1 to 3. The Patent Documents 1 and 2 describe a sealing device constituting with a first seal which is attached to the inner circumferential end portion of an outer member and is slidably in contact with the hub wheel and a second seal which is attached to the outer circumferential end portion of the outer member and is slidably in contact with the hub wheel. The documents describe that the second seal prevents entry of muddy water into the first seal, the second seal being attached to the outer circumferential end portion of the outer member and having a side lip to be slidably in contact with the hub wheel, so that sealing ability can be improved.

The Patent Document 3 describes that the outermost side lip of three side lips to be slidably in contact with the hub flange is inclined and raised outwardly from the outer circumferential face of the outer member. According to this document, each interference of three side lips is set in such a manner that the inner side lip has a smaller interference than the outer one, so that the seal torque can be suppressed and set within an appropriate range and sealing durability can be improved by making wear speed of the lips vary.

However, when the tip end of the side lip is formed so as to direct to the hub wheel side as mentioned in the Patent Documents 1 to 3, the tip end may be directly hit, namely attacked, by outside muddy water. Here it is explained, referring to a drawing, how the side lip provided at outermost diameter side is hit by the outside muddy water and what adverse effect is caused.

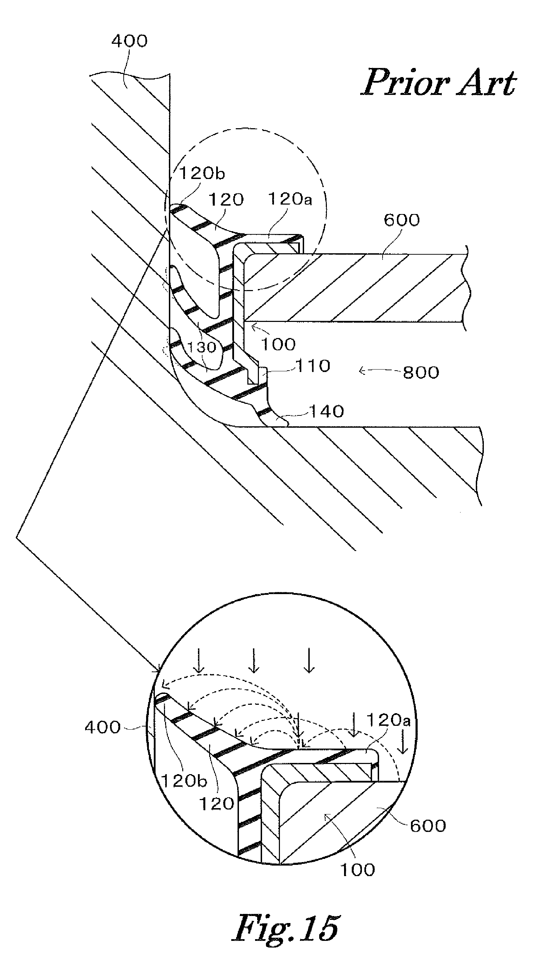

Fig. 15 represents an embodiment of a conventional sealing device 800 mounted between the outer ring at hub flange side and a hub wheel and arrows show how the tip end of the exterior seal 120 of the sealing device is affected in the enlarged view.

In the figure, the reference numeral 100 is a core metal, 110 is a seal member, 120 is an exterior lip, 120a is a lip base portion at outer circumferential side of the seal member 110 provided at outer circumferential side of an outer ring 600, 120b is the tip end portion of the exterior lip, 130 is a side lip, 140 is a radial lip, 400 is a hub flange, 600 is an outer ring, and 800 is a sealing device. The arrows with solid lines show a movement of muddy water which directly hits the exterior lip 120 and the lip base portion 120a at the outer circumferential side and the arrows with dotted lines show a movement of muddy water which is brushed aside by the lip base portion 120a at outer circumferential side in the enlarged view.

As shown in Fig. 15, the exterior lip 120 provided with the seal member 110 is formed at a further outer side of the side lip 130 toward the hub flange 400 and the tip end is provided adjacent to the hub flange 400. Therefore, in general, the gap between the outer ring 600 and the hub flange 400 can be sealed preferably because of the exterior lip 120 without increasing the rotary torque.

### PRIOR ART DOCUMENTS

PATENT DOCUMENT 1 :
   Japanese Patent Application Publication JP-A-2007-100 827
PATENT DOCUMENT 2 :
   Japanese Patent Application Publication JP-A-2007-303 490
PATENT DOCUMENT 3 :
   Japanese Patent Application Publication JP-A-2007-100 826

### DISCLOSURE OF INVENTION

### TECHNICAL PROBLEM

However, such an exterior lip 120 may be hit by the muddy water (dotted arrows) brushed aside by the outer circumference of the lip base portion 120a at the outer circumferential side and the outer ring 600 in addition to the muddy water (solid arrows) directly hitting on the tip end portion 120b of the exterior lip 120. When the tip end portion 120b of the exterior lip 120 is hit by muddy water (see the partial enlarged view), the muddy water from outside of the bearing unit cannot be prevented and the muddy water may be allowed to pass through a minute gap between the tip end portion 120b of the exterior lip 120 and the outer circumferential face of the hub flange 400. Then, the slidably contacting portion of the side lip 130 may be worn away by the entered muddy water and dust, so that long sealing durability cannot be achieved.

The present invention is proposed in view of the above-mentioned problems and is proposed to provide a sealing device which can suppress the rotary torque even though having an exterior lip, is superior in sealing ability and has long sealing durability.

### TECHNICAL SOLUTION

According to a first aspect of the present invention, a sealing device disposed between an outer member and an inner member which has a flange portion, the outer and inner members being concentrically disposed and rotating relative to each other, comprises a core metal fit to the outer member and an elastic seal member having a seal lip integrally fixed to the core metal. The seal lip has a side lip elastically and slidably contacting the flange portion and an exterior lip formed at an outer diameter side of the side lip so as to extend toward the flange portion, the exterior lip having a projecting portion projecting toward the flange portion.

According to a further aspect of the present invention, a sealing device disposed between an outer member and an inner member which has a flange portion, the outer and inner members being concentrically disposed and rotating relative to each other, comprises a core metal fit to the outer member, an elastic seal member having a seal lip integrally fixed to the core metal and a slinger having a fitting cylindrical portion fit to the inner member and a brimmed portion at one end of the fitting cylindrical portion so as to extend in a radial direction. The seal lip has a side lip elastically and slidably contacting the brimmed portion of the slinger and an exterior lip formed at an outer diameter side of the side lip so as to extend toward the flange portion, the exterior lip having a projecting portion projecting toward the flange portion.

According to a further aspect of the present invention, a sealing device disposed between an outer member and an inner member which has a flange portion, the outer and inner members being concentrically disposed and rotating relative to each other, comprises a first seal device having a core metal fit to an outer circumferential end portion of the outer member and an elastic seal member which has a seal lip integrally fixed to the core metal and a second seal device fit to an inner circumferential end portion of the outer member. The seal lip has an exterior lip formed to extend toward the flange portion and the exterior lip has a projecting portion projecting toward the flange portion.

According to a further aspect of the present invention, the exterior lip has an inclined portion extending from a base portion of the elastic seal member toward the flange portion and a tip portion extending from an end of the inclined portion toward an opposite side of the flange portion, and the projecting portion is constituted by a bent portion formed between the inclined portion and the tip portion.

Such a sealing device with the exterior lip can be constituted even in a small space for providing the exterior lip. According to the configuration, the muddy water hit on the inclined portion is blocked at the tip end portion of the exterior lip, thereby enabling to reduce the muddy water directly hitting, namely attacking, the tip end of the exterior lip. Therefore, the amount of muddy water entering through the exterior lip is reduced and the side lip is prevented from being worn away, thereby preventing deterioration of sealing ability and sealing durability.

According to a further aspect of the present invention, the exterior lip has an inclined portion extending from a base portion of the elastic seal member toward the flange portion and a parallel portion extending in parallel to the flange portion, and the projecting portion is formed in a boundary between the inclined portion and the parallel portion.

Accordingly, the muddy water hit on the inclined portion of the exterior lip can be brushed aside toward the outer member and the brushed muddy water can be blocked by the parallel portion. In addition, the exterior lip has the parallel portion so that a labyrinth portion, which is to be provided in a gap space between the flange portion and the parallel portion from the tip end portion at outer diameter side up to the projecting portion of the parallel portion, may be widely reserved in radial direction, thereby enabling momentum of muddy water to weaken when it rushes toward the sealing device and thus entry of muddy water into the space around the side lip can be effectively prevented.

According to a further aspect of the present invention, the exterior lip has an inclined portion extending from a base portion of the elastic seal member toward the flange portion, a parallel portion extending in parallel to the flange portion and a tip portion extending toward an opposite side of the flange portion, and the projecting portion is formed in a boundary between the inclined portion and the parallel portion.

Accordingly, in addition to the above-mentioned effect of the exterior lip with the inclined portion and the parallel portion, by providing the tip end portion, the muddy water which is apt to be brushed aside by the outer member can be surely blocked in various bouncing patterns, thereby effectively preventing entry of the muddy water into the space around the side lip.

According to a further aspect of the present invention, the projecting portion is formed so as to contact the flange portion.

When the projecting portion is formed so as to come in contact with the flange portion, entry of muddy water from the outside into the space around the side lip can be surely prevented.

According to a further aspect of the present invention, the projecting portion is formed so as not to contact the flange portion.

When the projecting portion is formed so as not to come in contact with the flange portion, a long sealing durability can be achieved without increasing the rotary torque.

According to a further aspect of the present invention, the sealing device is adapted to seal a bearing space of a hub bearing, the outer member is an outer ring of the hub bearing, the inner member is a hub wheel which constitutes an inner ring of the hub bearing, and the flange portion is a hub flange which constitutes a part of the hub wheel.

Accordingly, the above-mentioned problems of the hub bearing at hub flange side can be solved and the sealing ability of the bearing space of the hub bearing can be improved. Further, increase of the rotary torque can be suppressed, even if providing with the exterior lip, while keeping the sealing ability which prevents entry of muddy water and dust into the bearing space and prevents leakage of a lubricant agent, thereby improving the fuel efficiency when being applied to automotive hub bearings.

### ADVANTAGEOUS EFFECTS

The sealing device of the present invention is mounted between the outer member and the inner member with the flange portion, the members being concentric and rotating relative to each other, and the exterior lip which is formed at outer side of the side lip elastically and slidably contacting the flange portion and is formed so as to direct to the flange portion has the projecting portion projecting toward the flange portion.

Therefore, entry of muddy water into the space around the side lip can be prevented by the exterior lip formed at outer side of the side lip and the sealing ability of the sealing device can be improved. In addition, when the muddy water directly hits the exterior lip, the muddy water can be brushed aside by the projecting portion of the exterior lip, and the muddy water brushed aside by the exterior lip can be prevented from entering again.

Therefore, entry of the muddy water into the space around the side lip can be reduced, the slidably contacting portion of the side lip can be prevented from being worn away, and deterioration of the sealing ability and decrease of the sealing durability can be prevented.

Further the present invention can be applied to the sealing device with a slinger and can be also applied to the sealing device constituted with two members, a first seal device and a second seal device.

### BRIEF DESCRIPTION OF DRAWINGS

- Fig. 1: is a longitudinal sectional view illustrating an embodiment of a bearing incorporated with the sealing device of a first embodiment of the present invention.
- Fig. 2: is an enlarged view of the portion of "X" in Fig. 1 and includes an enlarged view of its essential part of the present invention.
- Fig. 3: illustrates a modification of the embodiment in Fig. 2 like the enlarged view of "X" in Fig. 2.
- Fig. 4: illustrates other modification of the embodiment in Fig. 2 like the enlarged view of "X" in Fig. 2.
- Fig. 5: illustrates still other modification of the embodiment in Fig. 2 like the enlarged view of "X" in Fig. 2.
- Fig. 6: illustrates a second embodiment of the present invention like the enlarged view of "X" in Fig. 2.
- Fig. 7: illustrates a modification of the embodiment in Fig. 6 like the enlarged view of "X" in Fig. 2.
- Fig. 8: illustrates other modification of the embodiment in Fig. 6 like the enlarged view of "X" in Fig. 2.
- Fig. 9: illustrates a third embodiment of the present invention like the enlarged view of "X" in Fig. 2.
- Fig. 10: illustrates a modification of the embodiment in Fig. 9 like the enlarged view of "X" in Fig. 2.
- Fig. 11: illustrates other modification of the embodiment in Fig. 9 like the enlarged view of "X" in Fig. 2.
- Fig. 12: illustrates a fourth embodiment of the present invention like the
- Fig. 13: enlarged view of "X" in Fig. 2. illustrates a modification of the embodiment in Fig. 12 like the enlarged view of "X" in Fig. 2.
- Fig. 14: illustrates other modification of the embodiment in Fig. 12 like the enlarged view of "X" in Fig. 2.
- Fig. 15: illustrates a conventional sealing device, corresponding to Fig. 2.

### BEST MODE FOR CARRYING OUT THE INVENTION

### First Embodiment

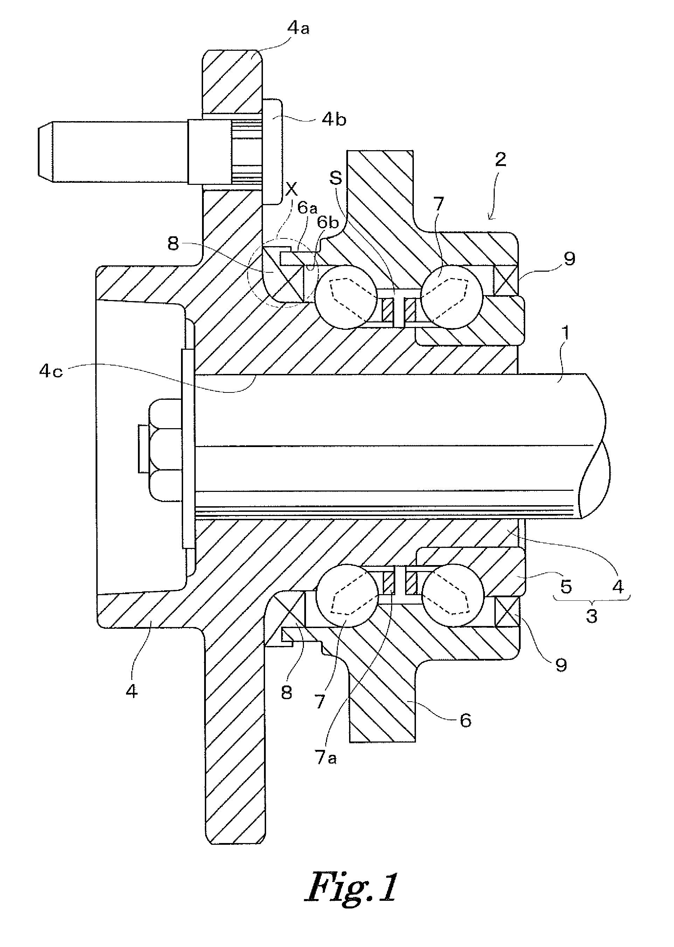

A first embodiment of the present invention is explained referring to Fig. 1 to Fig. 5.

Fig. 1 shows one embodiment of a hub bearing 2 rotatably supporting vehicle wheels of automobile in which a tire wheel (not shown) is fixed to a hub flange 4a of a hub wheel 4 constituting an inner ring (inner member) 3 with a bolt 4b. A driving shaft 1 is spline fit in a spline hole 4c of the hub wheel 4 and is integrally fixed to the hub wheel 4, thereby transmitting the rotating drive force of the driving shaft 1 into the tire wheel via the hub wheel 4. Thus the hub wheel 4 constitutes the inner ring 3 in combination with the inner ring member 5.

The reference numeral 6 indicates an outer ring (outer member) which is attached and fixed to the vehicle suspension (not shown) with bolts (not shown). Two rows of rolling elements (balls) 7 are interposed while being held with a retainer 7a between the outer ring 6 and the inner ring 3 (hub wheel 4 and the inner ring member 5). The reference numerals 8 and 9 indicate sealing devices (seal rings) for preventing leakage of lubricant like grease to be charged in the rolling portion of the rolling elements 7 and for preventing entry of muddy water and dust from outside.

The sealing device 8 mounted opposite to the vehicle body (at hub flange 4a side) corresponds to the sealing device of the present invention and is inserted under pressure between the outer ring 6 and the inner ring 3. The space surrounded with the sealing devices 8, 9 at both sides, the inner ring 3 and the outer ring 6 constitutes an area to be sealed S (bearing space). The outer circumference of the outer ring 6 is represented with the reference numeral 6a and the inner circumference thereof is 6b.

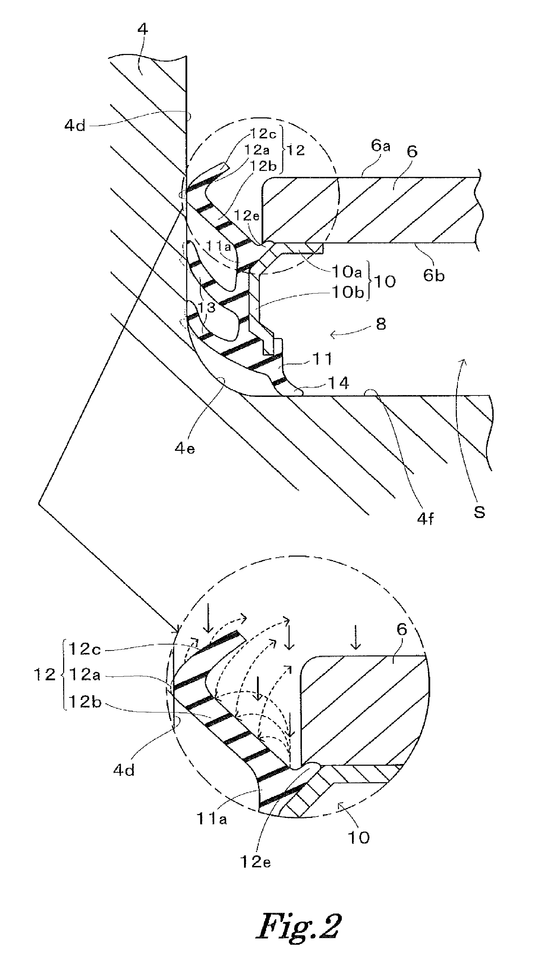

Fig. 2 is an enlarged sectional view of the mounted portion of the sealing device 8 opposite to the vehicle body and includes a further enlarged view of the essential part, and the structure of the sealing device 8 is explained referring to Fig. 2. The arrows with solid lines show movement of the muddy water directly hitting the exterior lip 12 and the arrows with dotted lines show movement of the muddy water brushed aside by the exterior lip 12 in the enlarged figure.

The sealing device 8 comprises, in combination, a ring-like core metal 10 which is press-fit to the inner circumference 6b of the outer ring 6 and an elastic seal member 11 which is made of an elastic material and fixed to the core metal 10. The sealing device 8 seals between the outer circumferential face of the hub wheel 4 raised into the hub flange 4a and the outer ring 6. The outer circumferential face of the hub wheel 4 has an axial face 4d (flange portion) and a radial face 4f which is extended from the axial face via a concave curved portion 4e.

The core metal 10 is formed by bending a ring-like steel plate and has a fitting cylindrical portion 10a integrally fit to the outer ring 6 and an inward brimmed portion 10b extended into the radial direction from one end of the fitting cylindrical portion 10a, the end being an outside end relative to the area S to be sealed. The inward brimmed portion 10b is formed by bending into the radial direction from the one end depending on the shape of the elastic seal member 11. The elastic seal member 11 is integrally fixed along the inner circumferential edge portion of the inward brimmed portion 10b from the one end of the fitting cylindrical portion 10a of the core metal 10.

The elastic seal member 11 in the figure has four seal lips formed in a concentric manner. The seal lips include two side lips 13 which are formed in the axial direction and are in elastically and slidably contact with the axial face 4d, one exterior lip 12 which is arranged at outer diameter side from the side lip 13 and is in elastically and slidably contact with the axial face 4d, and one radial lip 14 which is formed in the radial direction and is in elastically and slidably contact with the radial face 4f.

The elastic seal member 11 has an extruded portion 12e projecting toward the inner circumference 6b of the outer ring 6 from one end of the fitting cylindrical portion 10a of the core metal 10, the end being the outside end relative to the area S to be sealed.

The exterior lip 12 has a projecting portion 12a projecting toward the axial face 4d, an inclined portion 12b extending obliquely in radial direction in expanded form toward the axial face 4d from the base portion 11a of the elastic seal member 11, and a tip portion 12c extended from the tip of the inclined portion 12b against the axial face (outer ring 6 side). The bent portion of the inclined portion 12b and the tip portion 12c constitutes the projecting portion 12a.

The core metal 10 of the sealing device 8 is press-fit to the inner circumference 6b of the outer ring 6, the outer ring 6 and the hub wheel 4 are assembled, the exterior lip 12 and the side lip 13 make elastic contact with the axial face 4d of the hub wheel 4, and the radial lip 14 makes elastic contact with the radial face 4f. Then, the lips elastically deform from the position shown with two-dotted lines to the position shown with solid lines. The projecting portion 12a of the exterior lip 12 has a chevron shaped section and is designed so as to have a slight line contact when it is in contact with the axial face 4d, so that there is no fear of increasing the rotary torque.

Thus, according to the sealing device 8 press-fit between the inner ring 3 and the outer ring 6, the exterior lip 12 and the side lip 13 of the elastic seal member 11 make elastically and slidably contact with the axial face 4d each other accompanied with axial rotation of the inner ring 3, thereby preventing entry of dust or muddy water into the area S to be sealed from outside.

Further accompanied with press-fit of the core metal 10 under pressure into the inner circumference 6b of the outer ring 6, the extruded portion 12e of the elastic seal member 11 is attached to the inner circumference 6b of the outer ring 6 under pressed conditions. Therefore, the gap between the fitting cylindrical portion 10a and the inner circumference 6b is sealed with the resilience force of the extruded portion 12e and a higher sealing ability can be achieved in addition to the prevention effect of entry of muddy water by means of the exterior lip 12.

Further, as shown in Fig. 2, the exterior lip 12 is bent so that the sealing device can be mounted in a small space like between the outer ring 6 and the axial face 4d. In addition, although the seal member 11 is composed of one member, the muddy water hit on the inclined portion 12b can be blocked by the tip portion 12c of the exterior lip 12 formed at outer diameter side (outermost circumferential side) toward the side lip 13, so that the tip end of the exterior lip 12 is hardly hit, namely attacked, directly by the muddy water.

Therefore, the amount of the muddy water entering through the exterior lip 12 is reduced and abrasion of the side lip 13 when being slidably in contact with the axial face 4d is prevented, thereby eliminating deterioration of the sealing ability and decrease of the sealing durability.

Namely, when the muddy water directly hits the exterior lip 12 as shown in the enlarged view in Fig. 2 (see arrows with solid lines), the muddy water can be brushed aside by the tip portion 12c of the exterior lip 12. Further, the amount of the muddy water entering into the gap between the exterior lip 12 and the axial face 4d can be remarkably reduced by the projecting portion 12a compared with conventional structure.

The exterior lip 12 having the tip portion 12c and the projecting portion 12a which block muddy water and dust from outside is constituted at outer diameter side of the side lip 13. When the interferences of the side lip 13 and the radial lip 14 which are provided at inside diameter side of the exterior lip 12 are designed to be reduced so as to make the rotary torque smaller, the sealing ability of the sealing device 8 cannot be deteriorated. In addition, the sealing device 8 is constituted with one member, so that the number of parts and the number of attaching man-hour can be reduced compared with the device constituted with two members.

The core metal 10 is made of a cold rolled steel sheet or a stainless steel sheet and is obtained by sheet metal processing. Usage of a rust-resistant SUS or a steel plate rendered with rust-proofing treatment can prevent generation of rust. The elastic seal member 11 is made of an elastic material including rubber selected from NBR, H-NBR, ACM, AEM, FKM and the like and is integrally affixed to the core metal 10 with vulcanization molding of the elastic material or an adhesive agent. Soft plastics having elasticity may be used other than the above-mentioned elastic material, and they may be injection molded and be stuck on the core metal 10 with an adhesive agent.

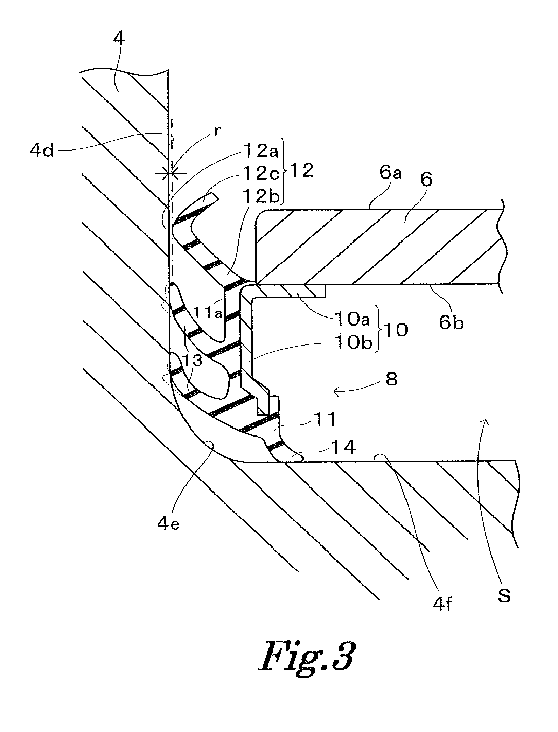

Fig. 3 is a modification of the first embodiment and is different from the embodiment in Fig. 2 in that the projecting portion 12a of the exterior lip 12 is non-contact type and a labyrinth "r" is formed between the axial face 4d and the projecting portion 12a.

Thus, the exterior lip 12 has the projecting portion 12a projecting toward the axial face 4d, so that even when the projecting portion 12a is provided so as not be in contact with the axial face 4d, entry of muddy water is reduced and abrasion of the side lip 13 is inhibited, thereby achieving a long life of the sealing ability. Further, even when the exterior lip 12 is provided, the rotary torque is not increased and the energy consumption of automobile can be improved.

The explanation about other structures and functions of the sealing device will be omitted with their common portions denoted by the same reference numerals.

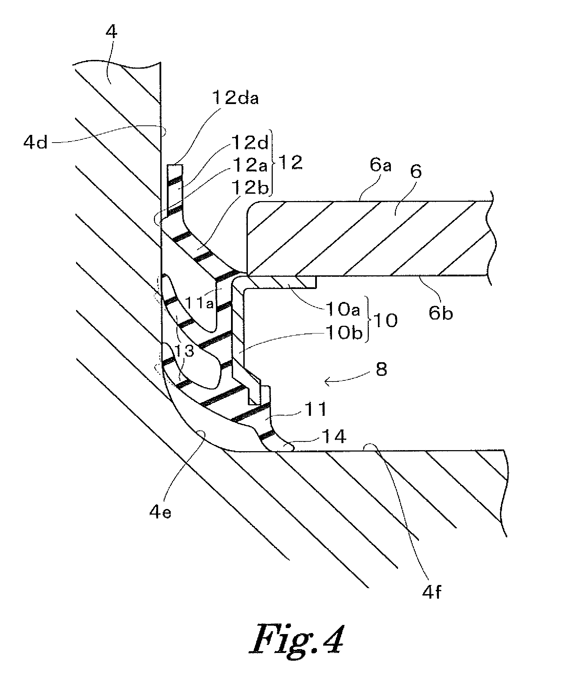

In Fig. 4 the shape of the exterior lip 12 is different from that in Fig. 2.

In the embodiment of Fig. 4, the exterior lip 12 has the inclined portion 12b extending obliquely in radial direction in expanded form toward the axial face 4d from the base portion 11a of the elastic seal member 11, and a parallel portion 12d extending substantially in parallel relative to the axial face 4d. The projecting portion 12a projecting toward the axial face 4d is provided at the boundary of the inclined portion 12b and the parallel portion 12d. The projecting portion 12a is same as that in Fig. 2 in that it is formed so as to have a slight line contact with the axial face 4d.

According to such a structure, muddy water would be brushed aside toward the outer ring 6 by means of the inclined portion 12b provided in the exterior lip 12, moreover a labyrinth portion, which is to be provided in a gap space between the axial face 4d and the parallel portion 12d from the tip portion at outer diameter side 12da of the parallel portion 12d up to the projecting portion 12a, can be also reserved more widely in radial direction, thereby enabling momentum of muddy water to weaken when it rushes toward the sealing device, and thus entry of muddy water into the space around the side lip 13 can be effectively prevented.

Of course entry of muddy water as brushed aside by the inclined portion 12b or the outer ring 6 may be also blocked by the parallel portion 12d as well as the tip portion 12c as mentioned above.

The explanation about other structures and functions of the sealing device will be omitted with their common portions denoted by the same reference numerals.

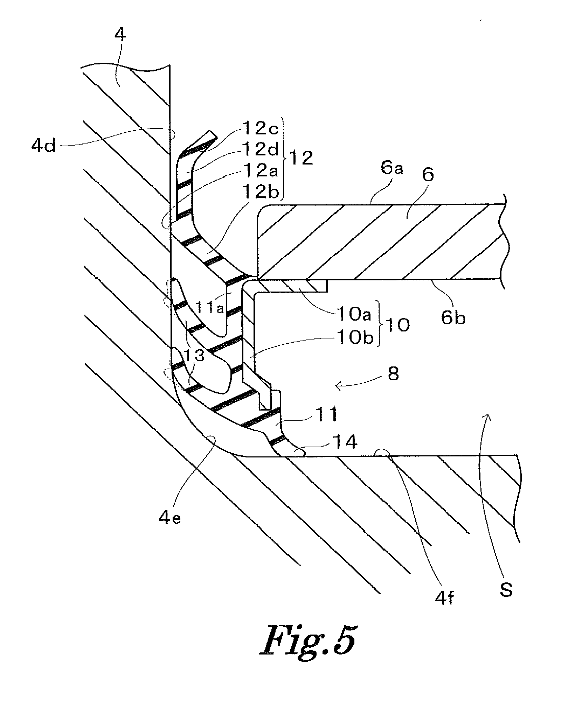

In Fig. 5 the exterior lip 12 is shaped different from that in Fig. 2.

In the embodiment of Fig. 5, the exterior lip 12 has the inclined portion 12b extending obliquely in radial direction in expanded form toward the axial face 4d from the base portion 11a of the elastic seal member 11, the parallel portion 12d extending substantially in parallel relative to the axial face 4d from the inclined portion, and a tip portion 12c which is extended from the parallel portion against the axial face 4d (into outer ring 6 side).

The projecting portion 12a projecting toward the axial face 4d is provided at the boundary of the inclined portion 12b and the parallel portion 12d. The projecting portion 12a is same as the example shown in Fig. 2 in that it is formed as to have a slight line contact with the axial face 4d.

Accordingly, in addition to the above-mentioned effect of the exterior lip 12 having the inclined portion 12b and the parallel portion 12d, further providing the tip portion 12c, the muddy water which is apt to be brushed aside by the outer ring 6 can be surely blocked in various bouncing patterns, thereby more effectively preventing entry of muddy water into the space around the side lip 13.

The explanation about other structures and functions of the sealing device will be omitted with their common portions denoted by the same reference numerals.

### Second Embodiment

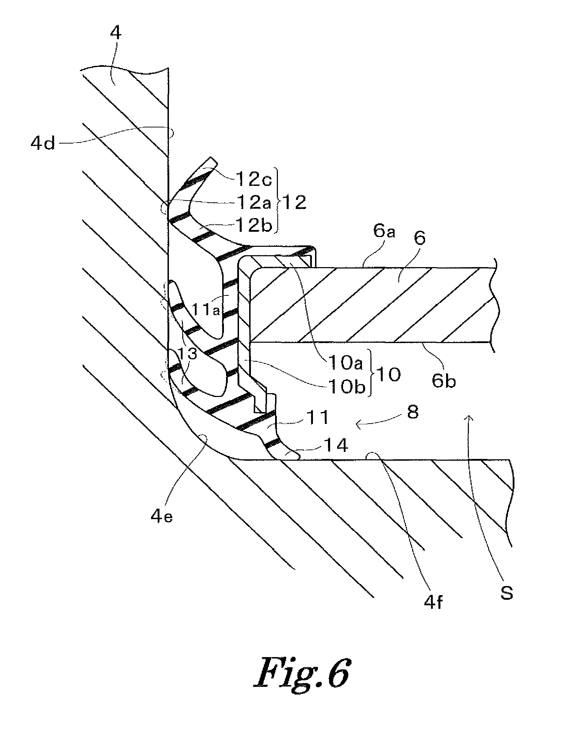

Next, a second embodiment of the present invention is explained referring to Fig. 6 to Fig. 8.

Fig. 6 corresponds to the enlarged view of "X" in Fig. 1, the same reference numerals are allotted to those members common to the first embodiment and their explanation is omitted here.

The sealing device 8 of the second embodiment is different from that of the first embodiment in that the ring-like core metal 10 is press-fit to the outer circumference 6a of the outer ring 6.

Similar to the embodiment in Fig. 2, the elastic member 11 has four seal lips formed in concentric manner, the seal lips are two side lips 13 which are formed in the axial direction and are in elastically and slidably contact with the axial face 4d, one exterior lip 12 which is arranged at outer side of the side lip 13 and is in elastically and slidably contact with the axial face 4d, and one radial lip 14 which is formed in the radial direction and is in elastically and slidably contact with the radial face 4f. In addition the projecting portion 12a of the exterior lip 12 is formed so as to project toward the axial face 4d.

When the core metal 10 is thus press-fit to the outer circumference 6a of the outer ring 6, the sealing space can be reserved widely and sealing can be flexibly designed compared with the case (first embodiment) in which the core metal 10 is press-fit to the inner circumference 6b.

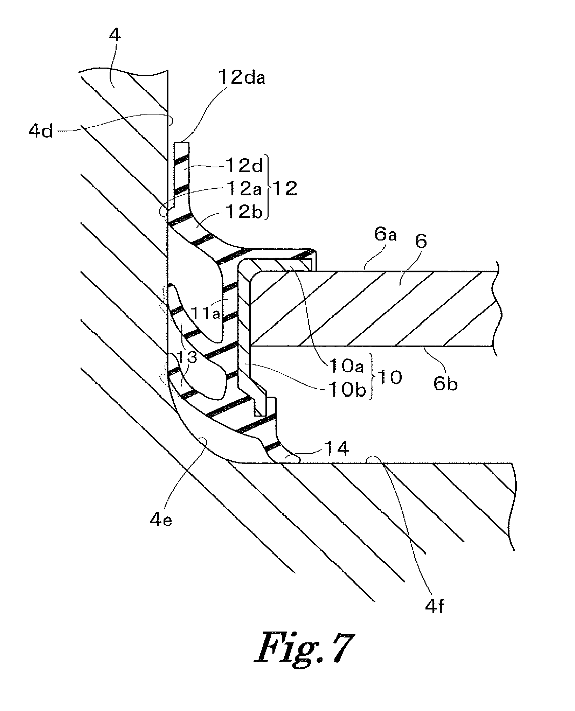

In Fig. 7 the shape of the exterior lip 12 is different from that in Fig. 6.

In the embodiment of Fig. 7, the exterior lip 12 has the inclined portion 12b extending obliquely toward the axial face 4d, and the parallel portion 12d extending substantially in parallel relative to the axial face 4d. The projecting portion 12a projecting toward the axial face 4d is provided in the boundary between the inclined portion 12b and the parallel portion 12d. The structure and effect thereof are same as those of the first embodiment shown in Fig. 4

Accordingly, in addition to the above-mentioned effects, providing the parallel portion 12d for the exterior lip 12, the labyrinth portion, which is to be provided in a gap space between the axial face 4d and the parallel portion 12d from the tip portion at outer diameter side 12da of the parallel portion 12d up to the projecting portion 12a, can be widely reserved in radial direction.

As a result, momentum of muddy water is further weakened by the parallel portion 12d of the exterior lip 12 compared with the embodiment in Fig. 6 and entry of almost all muddy water can be prevented by the projecting portion 12a of the exterior lip 12.

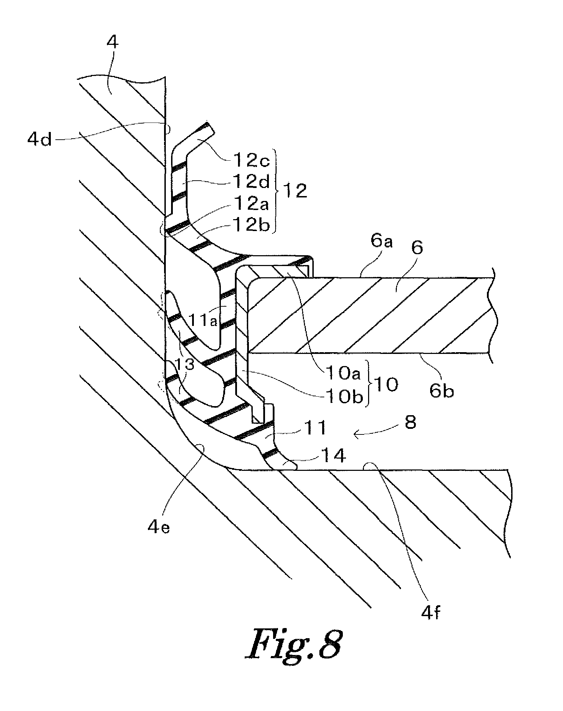

In Fig. 8 the shape of the exterior lip 12 is different from that in Fig. 6.

In the embodiment of Fig. 8, the exterior lip 12 has the inclined portion 12b extending obliquely in radial direction in expanded form toward the axial face 4d from the base portion 11a of the elastic seal member 11, the parallel portion 12d extending substantially in parallel relative to the axial face 4d from the inclined portion 12b, and the tip portion 12c extended from the parallel portion 12d against the axial face 4d (into outer ring 6 side). The projecting portion 12a projecting toward the axial face 4d is provided in the boundary between the inclined portion 12b and the parallel portion 12d and the structure and effect thereof are same as those of the first embodiment shown in Fig. 5

Accordingly, in addition to the effect that the core metal 10 is press-fit to the outer circumference 6a of the outer ring 6 as mentioned above, and the effect of the exterior lip 12 having the above-mentioned inclined portion 12b and parallel portion 12d, further providing the tip portion 12c, the muddy water which is apt to be brushed aside by the outer ring 6 can be surely blocked in various bouncing patterns, thereby more effectively preventing entry of muddy water into the space around the side lip 13.

### Third Embodiment

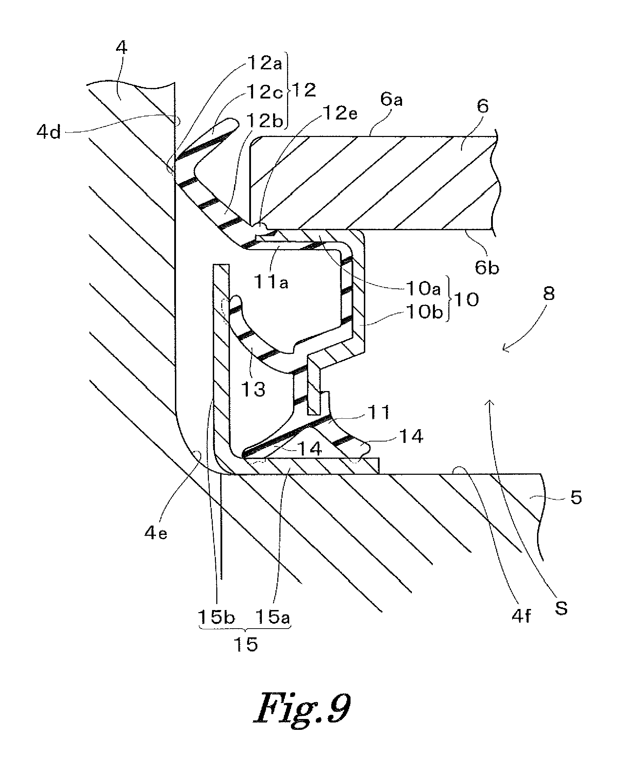

Next, a third embodiment of the present invention is explained referring to Fig. 9 to Fig. 11.

Fig. 9 corresponds to the enlarged view of "X" in Fig. 1, the same reference numerals are allotted to those members common to the first embodiment and their explanation is omitted here.

The sealing device 8 of the third embodiment is different from the first embodiment and the second embodiment in that it is constituted as a seal ring of pack seal type as shown in the figure such that the ring-like core metal 10, the elastic seal member 11 which is made of an elastic material and is fixed to the core metal 10, and a slinger 15 to be externally fit and fixed to the outer circumference of the inner ring 3 are assembled.

The slinger 15 comprises a fitting cylindrical portion 15a to be externally fit and fixed to the outer circumference of the inner ring member 5, and an outward brimmed portion (flange-like portion) 15b formed so as to extend in the radial direction (centrifugal direction) from one end of the fitting cylindrical portion 15a, the one end being outside relative to the area S to be sealed. The core metal 10 comprises a fitting cylindrical portion 10a to be press-fit to the inner circumference 6b of the outer ring 6 and an inward brimmed portion 10b formed so as to extend into the radial direction (centripetal direction) at one end of the fitting cylindrical portion 10a, the end being at area S to be sealed side. The slinger 15 and the core metal 10 have a substantially L-shaped cross section and are assembled so as to face each other.

The slinger 15 is made of a cold rolled steel sheet or a stainless steel sheet. Usage of a rust-resistant SUS or a steel plate rendered with rust-proofing treatment can prevent generation of rust like the core metal 10, thereby improving the rust-proofing ability of the lip sliding portion of the side lip 13 and the radial lip 14.

The elastic seal member 11 in the figure has four seal lips; one concentric side lip 13 which is formed axially so as to be in elastically and slidably contact with the inside relative to the area S to be sealed of the outward brim portion 15b of the slinger 15, one exterior lip 12 formed at outer side of the side lip 13 so as to be in elastically and slidably contact with the axial face 4d, and two radial lips 14 which are formed in radial direction so to be slidably in contact with the circumferential face of the fitting cylindrical portion 15a of the slinger 15.

The elastic seal member 11 has an extruded portion 12e projecting toward the inner circumference 6b of the outer ring 6 from one end of the fitting cylindrical portion 10a of the core metal 10, the one end being outside relative to the area S to be sealed, like the embodiment in Fig. 2 and the same effect can be achieved.

The exterior lip 12 has the projecting portion 12a projecting toward the axial face 4d, an inclined portion 12b extending obliquely in radial direction in expanded form toward the axial face 4d, and the tip portion 12c extended against the axial face side (outer ring 6 side). The bent portion of the inclined portion 12b and the tip portion 12c constitute the projecting portion 12a.

Accordingly, only the exterior lip 12 of the elastic seal member 11 is formed so as to project toward the axial face 4d from one end of the fitting cylindrical portion 10a of the core metal 10.

Accordingly, when muddy water directly hits the exterior lip 12, the muddy water can be brushed aside by the tip portion 12c of the exterior lip 12 and entry of the muddy water is remarkably reduced by the projecting portion 12a. Therefore, the side lip 13 is prevented from being worn away and deterioration of the sealing ability and seal duration can be avoided. Even when the sealing device 8 to be mounted opposite to the vehicle body has the slinger 15, entry of muddy water can be blocked by the exterior lip 12, so that it can be avoided that muddy water is collected between the concave curved portion 4e of the hub wheel 4 and the slinger 15.

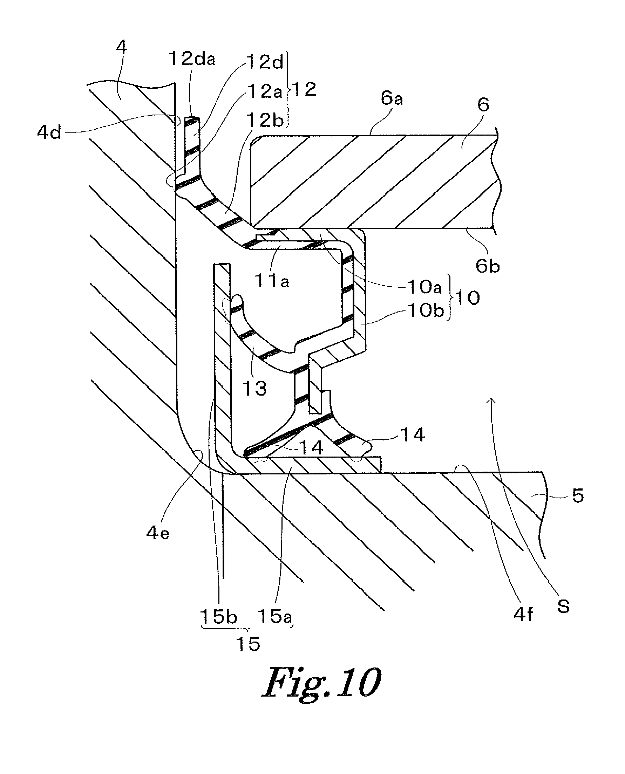

In Fig. 10 the shape of the exterior lip 12 is different from that in Fig. 9.

In the embodiment of Fig. 10, the exterior lip 12 has the inclined portion 12b extending obliquely toward the axial face 4d from the base portion 11a of the elastic seal member 11, and the parallel portion 12d extending substantially in parallel relative to the axial face 4d from the inclined portion 12b. The projecting portion 12a projecting toward the axial face 4d is provided at the boundary of the inclined portion 12b and the parallel portion 12d. The structure and effect thereof are same as those of the first embodiment shown in Fig. 4

Accordingly, in addition to the effect that muddy water entered from outside can be prevented by the exterior lip 12 before reaching the slinger 15 and the side lip 13 as mentioned above, providing the parallel portion 12d for the exterior lip 12, the labyrinth portion, which is to be provided in a gap space between the axial face 4d and the parallel portion 12d from the tip portion at outer diameter side 12da of the parallel portion 12d up to the projecting portion 12a, can be also reserved more widely in radial direction.

As a result, momentum of muddy water is weakened by the parallel portion 12d of the exterior lip 12 and entry of almost all muddy water can be blocked by the projecting portion 12a of the exterior lip 12.

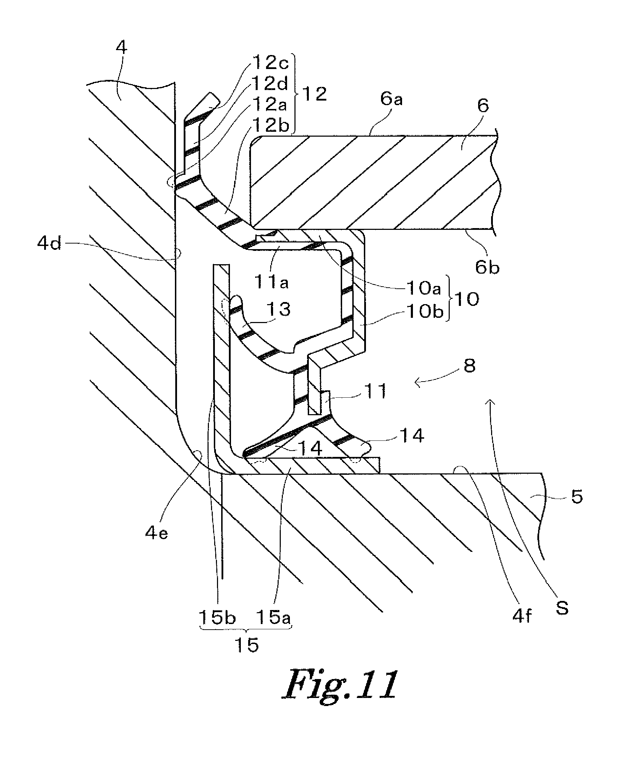

In Fig. 11 the shape of the exterior lip is different from that in Fig. 9.

In the embodiment of Fig. 11, the exterior lip 12 has the inclined portion 12b extending obliquely in radial direction in expanded form toward the axial face 4d from the base portion 11a of the elastic seal member 11, the parallel portion 12d extending substantially in parallel relative to the axial face 4d, and a tip portion 12c which is extended from the parallel portion toward the opposite side of the axial face 4d (into outer ring 6 side). The projecting portion 12a projecting toward the axial face 4d is provided in the boundary between the inclined portion 12b and the parallel portion 12d and the structure and effect thereof are same as those of the first embodiment shown in Fig. 5

Accordingly, in addition to the effect that dust and muddy water entered from outside can be prevented by the exterior lip 12 before reaching the slinger 15 and the side lip 13 as mentioned above and the above-mentioned effect of the exterior lip 12 having the inclined portion 12b and the parallel portion 12d, providing the tip portion 12c for the exterior lip 12, the muddy water which is apt to be brushed aside by the outer ring 6 can be surely blocked in various bouncing patterns, thereby more effectively preventing entry of muddy water into the space around the side lip 13.
In this embodiment the core metal 10 is fit to the inner circumference 6b of the outer ring 6, however, it may be press-fit to the outer circumference 6a of the outer ring 6 in the third embodiment shown in Fig. 9 to Fig. 11.

### Fourth Embodiment

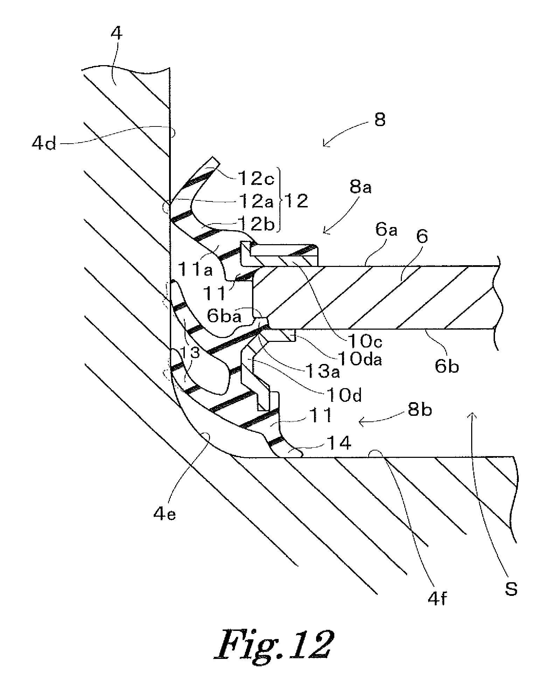

Next, a fourth embodiment of the present invention is explained referring to Fig. 12 to Fig. 14.

Fig. 12 corresponds to the enlarged view of "X" in Fig. 1, the same reference numerals are allotted to those members common to the first embodiment and their explanation is omitted here.

The sealing device 8 of the fourth embodiment is different from that of the above-mentioned embodiments in that it comprises two members of a first seal device 8a to be fit to the end portion of the outer circumference 6a of the outer ring 6 and a second seal device 8b to be fit to the end portion of the inner circumference 6b of the outer ring 6.

The first seal device 8a comprises a first core metal 10c fit to the end portion of the outer circumference 6a of the outer ring 6 and the elastic seal member 11 having a seal lip integrally affixed to a first core metal 10c. The seal lip has one exterior lip 12 formed so as to direct to the axial face 4d. The elastic seal member 11 is formed so as to embrace the axial face 4d side of the first core metal 10c with the core metal 10c attached to the outer ring 6.

The exterior lip 12 has the projecting portion 12a formed so as to project into the axial face 4d, the inclined portion 12b in radial direction in expanded form toward the axial face 4d from the base portion 11a of the elastic seal member 11, and the tip portion 12c extended from the tip of the inclined portion 12b against the axial face side (outer ring 6 side). The bent portion of the inclined portion 12b and the tip portion 12c constitute the projecting portion 12a.

The second seal device 8b comprises a second core metal 10d to be fit to the end portion of the inner circumference 6b of the outer ring 6 and the elastic seal member 11 having a seal lip integrally affixed to the second core metal 10d. The seal lip includes three concentric seal lips; two side lips 13 which are formed in the axial direction and are in elastically and slidably contact with the axial face 4d and one radial lip 14 which is formed in the radial direction and is in elastically and slidably contact with the radial face 4f.

The elastic seal member 11 has an extruded portion 13a projecting toward the inner circumference 6b side of the outer ring 6 from one end of a fitting cylindrical portion 10da of the second core metal 10d, the end being the outside end relative to the area S to be sealed. The extruded portion 13a is formed so as to be fit to a step portion 6ba formed at the end portion at inner circumference 6b side of the outer ring 6.

The first core metal 10c of the first seal device 8a is press-fit to the end portion of the outer circumference 6a of the outer ring 6, the second core metal 10d of the second seal device 8b is press-fit to the end portion of the inner circumference 6b of the outer ring 6, the outer ring 6 and the hub wheel 4 are assembled, and when the exterior lip 12 and the slide lip 13 make slidably contact with the axial face 4d of the hub wheel 4 and the radial lip 14 makes elastic contact with the radial face 4f, the elastic member 11 is elastically deformed into the position shown with solid lines from the position shown with two-dotted lines.

Accordingly, the shape of the exterior lip 12 is different from the conventional one constituted with two members, so that when muddy water directly hits the exterior lip 12 of the first seal device 8a, the muddy water can be brushed aside by the tip portion 12c of the exterior lip 12 and entry of muddy water can be remarkably reduced by the projecting portion 12a. Therefore, the amount of muddy water entering into the second seal device 8b is reduced and the side lip 13 is prevented from being worn away, thereby preventing deterioration of the sealing ability and sealing durability of the whole sealing device 8.

Further, accompanied with the second core metal 10d being fit to the inner circumference 6b of the outer ring 6, the extruded portion 13a of the elastic seal member 11 is fit to the step portion 6ba of the outer ring 6 under pressed condition. Therefore, the gap between the cylindrical fitting portion 10da of the second core metal 10d and the inner circumference 6b is sealed by the resilience force of the extruded portion 13a, thereby achieving a high sealing ability in addition to the above-mentioned prevention effect of muddy water by the exterior lip 12.

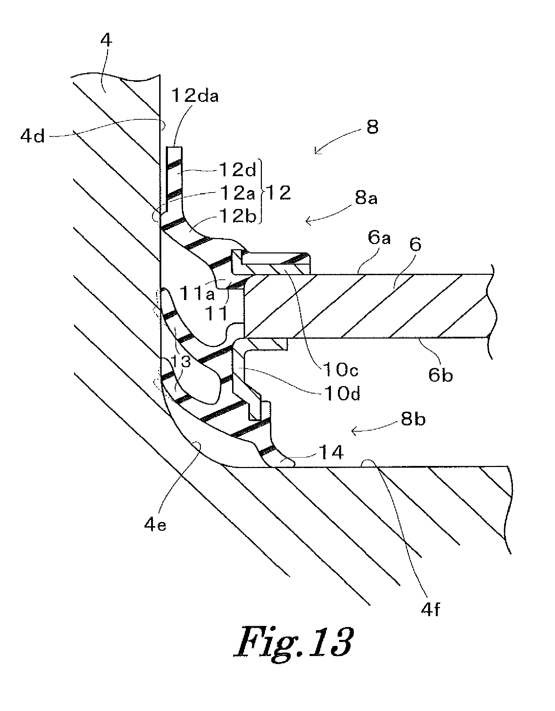

In Fig. 13 the shape of the exterior lip 12 of the first seal device 8a is different from that in Fig. 12.

In the embodiment of Fig. 13, the exterior lip 12 has the inclined portion 12b extending obliquely toward the axial face 4d from the base portion 11a of the elastic seal member 11, and the parallel portion 12d extending substantially in parallel relative to the axial face 4d from the inclined portion 12b. The projecting portion 12a projecting toward the axial face 4d is provided at the boundary of the inclined portion 12b and the parallel portion 12d. The structure and effect thereof are same as those of the first embodiment shown in Fig. 4

Accordingly, in addition to the effect that the muddy water entered from outside can be prevented by the exterior lip 12 before reaching the second seal device 8b as mentioned above, providing the parallel portion 12d for the exterior lip 12, the labyrinth portion, which is to be provided in a gap space between the axial face 4d and the parallel portion 12d from the tip portion at outer diameter side 12da of the parallel portion 12d up to the projecting portion 12a, can be widely reserved in radial direction.

As a result, momentum of the muddy water rushing toward the sealing device is weakened by the parallel portion 12d of the exterior lip 12 and entry of most muddy water can be prevented by the first seal device 8a.

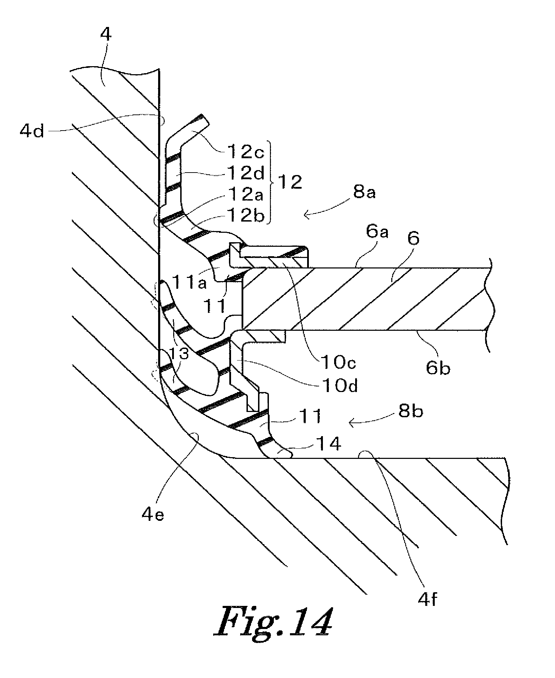

In Fig. 14 the shape of the exterior lip 12 is different from that in Fig. 12.

In the embodiment of Fig. 14, the exterior lip 12 has the inclined portion 12b extending into the axial face 4d from the base portion 11a of the elastic seal member 11, the parallel portion 12d extending substantially in parallel relative to the axial face 4d from the inclined portion 12b, and a tip portion 12c which is extended from the parallel portion 12d against the axial face 4d (into outer ring 6 side). The projecting portion 12a projecting toward the axial face 4d is provided at the boundary of the inclined portion 12b and the parallel portion 12d and the structure and effect thereof are same as those of the first embodiment shown in Fig. 5

Accordingly, in addition to the above-mentioned effect that entry of dust and muddy water from outside can be prevented by the exterior lip 12 before reaching the second seal device 8b and the above-mentioned effect of the exterior lip 12 having the inclined portion 12b and the parallel portion 12d, providing the tip portion 12c, muddy water which is apt to be brushed aside by the outer ring 6 can be surely blocked in various bouncing patterns, thereby more effectively preventing entry of muddy water into the space around the second seal device 8b.

In the above-mentioned embodiments, the inner ring 3 is supposed to be the inner member to be a rotary side member and the outer ring 6 is supposed to be the outer member to be a fixed side member, however, they may be reversed. Further, the number of the seal lips may not be limited to four, and it may be less than 4 or more than 4. The structure and shape of the side lip 13 and the radial lip 14 are not limited to those shown in the figures. In addition, in the above-mentioned embodiments, the present invention is applied to the bearing unit supporting tire wheels to the driving shaft of automobile, however, it stands to reason that the present invention can be applied to other mechanism which requires sealing.

The exterior lip 12 in Fig. 4 to Fig. 14 has the projecting portion 12a of contact type, however, it is not limited and the projecting portion 12a of the exterior lip 12 may be provided so as to be non-contact as shown in Fig. 3. The elastic member 11 has the extruded portions 12e, 13a only in Fig. 2, Fig. 9, and Fig. 12 and such embodiments are explained, however, it may be applied to any one of the first, third, and fourth embodiments.

## Claims

1. A sealing device disposed between an outer member (6) and an inner member (3) which has a flange portion (4d), the outer and inner members (3, 6) being concentrically disposed and rotatable relative to each other, the sealing device comprising:
- a core metal (10) fit to the outer member (6); and
- an elastic seal member (11) having a seal lip (12, 13) integrally fixed to the core metal (10),
- wherein the seal lip (12, 13) comprises:
-- a side lip (13) elastically and slidably contacting the flange portion (4d); and
-- an exterior lip (12) formed at an outer diameter side of the side lip (13) so as to extend toward the flange portion (4d), the exterior lip (12) having a projecting portion (12a) projecting toward the flange portion (4d)

2. The sealing device according to claim 1,
further comprising:
- a slinger (15) having a fitting cylindrical portion (15a) fit to the inner member (3) and a brimmed portion (15b) formed at one end of the fitting cylindrical portion (15a) so as to extend in a radial direction,
- wherein the seal lip (12, 13) comprises:
-- a side lip (13) elastically and slidably contacting the brimmed portion (15b) of the slinger (15); and
-- an exterior lip (12) formed at an outer diameter side of the side lip (13) so as to extend toward the flange portion (4d), the exterior lip (12) having a projecting portion (12a) projecting toward the flange portion (4d).

3. The sealing device according to claim 1 or 2,
further comprising:
- a first seal device (8a) having a core metal (10c) fit to an outer circumferential end portion (6a) of the outer member (6) and an elastic seal member (11) which has a seal lip (12) integrally fixed to the core metal (10c); and
- a second seal device (8b) fit to an inner circumferential end portion (6b) of the outer member (6),
- wherein the seal lip has an exterior lip (12) formed to extend toward the flange portion (4d) and the exterior lip (12) has a projecting portion (12a) projecting toward the flange portion (4d).

4. The sealing device according to any one of claims 1 to 3,
wherein the exterior lip (12) comprises:
- an inclined portion (12b) extending from a base portion (11a) of the elastic seal member (11) toward the flange portion (4d); and
- a tip portion (12c) extending from an end of the inclined portion (12b) toward an opposite side of the flange portion (4d), and
- wherein the projecting portion (12a) is constituted by a bent portion formed between the inclined portion (12b) and the tip portion (12c).

5. The sealing device according to any one of claims 1 to 3,
wherein the exterior lip (12) comprises:
- an inclined portion (12b) extending from a base portion (11a) of the elastic seal member (11) toward the flange portion (4d); and
- a parallel portion (12d) extending in parallel to the flange portion (4d), and wherein the projecting portion (12a) is formed in a boundary between the inclined portion (12b) and the parallel portion (12d).

6. The sealing device according to any one of claims 1 to 3,
wherein the exterior lip (12) comprises:
- an inclined portion (12b) extending from a base portion (11a) of the elastic seal member (11) toward the flange portion (4d);
- a parallel portion (12d) extending in parallel to the flange portion (4d); and
- a tip portion (12c) extending toward an opposite side of the flange portion (4d);
and
- wherein the projecting portion (12a) is formed in a boundary between the inclined portion (12b) and the parallel portion (12d).

7. The sealing device according to any one of claims 1 top 6,
wherein the projecting portion (12a) is formed so as to contact the flange portion (4d).

8. The sealing device according to any one of claims 1 to 6,
wherein the projecting portion (12a) is formed so as not to contact the flange portion (4d).

9. The sealing device according to any one of claims 1 to 8,
wherein the sealing device (8) is adapted to seal a bearing space of a hub bearing (2), and
wherein the outer member (6) is an outer ring (6) of the hub bearing (2), the inner member is a hub wheel (4) which constitutes an inner ring (3) of the hub bearing (2), and the flange portion (4d) is a hub flange which constitutes a part of the hub wheel (4).
